# EUROPEAN PATENT APPLICATION

(11) **EP 2 120 153 A1**
(43) Date of publication of application: **18.11.2009**
(21) Application number: 08776868.5
(22) Date of filing: 23.07.2008
(51) Int. Cl.: G06F 17/14

(54) **ORTHOGONAL CONVERTER AND INTEGRATED CIRCUIT**

(30) Priority: 28.01.2008 JP 2008016769
(71) Applicant: Panasonic Corporation, Kadoma-shi Osaka 571-8501 (JP)
(72) Inventor: KUROKI, Hideki, Osaka-shi, Osaka 540-6207 (JP)
(74) Representative: Kügele, Bernhard
(86) International application number: PCT/JP2008/001959
(87) International publication number: WO 2009/095959

(57) **Abstract**

To implement processing for plural orthogonal transforms having different transform bases and implement a response to processing in new coding standards, using one orthogonal transform unit, with regard to orthogonal transform which is a basic process in still picture and moving picture coding.

An orthogonal transform apparatus includes: a first butterfly calculating unit (100) having a two-input basic calculating unit performing two-input product-sum calculation on part of input signals; a second butterfly calculating unit (101) having a four-input basic calculating unit performing four-input product-sum calculation on remaining input signals; a third butterfly calculating unit (102) in a subsequent stage to the second butterfly calculating unit, having a 2-point basic calculating unit performing 2-point product-sum calculation; first, second delaying units (203, 202) and so on, in subsequent stages to the first, third butterfly calculating units (100, 102) and so on, respectively; a fourth butterfly calculating unit (103) having a two-input basic calculating unit performing two-input product-sum calculation on data selected by first, second selecting units (303, 302) and so on; and a transform coefficient supplying unit (401). In the orthogonal transform apparatus, the product-sum calculations performed by the four-input basic calculating unit can be switched.

## Description

### Technical Field

The present invention relates to image coding such as moving picture coding. The present invention particularly relates to an orthogonal transform apparatus and an integrated circuit which perform orthogonal transform which is a basic process in image coding and decoding.

### Background Art

Conventionally, there is an orthogonal transform apparatus which performs orthogonal transform which is a basic process in image coding and decoding.

In current moving picture compression and expansion, there are MPEG (Motion Picture Expert Group) moving picture coding standards such as MPEG-1, MPEG-2, MPEG-4, H.264/AVC, and VC-1 which are defined by the standards in order to be compatible with differences in image size and medium employed. For example, MPEG-1 and MPEG-2 are used for media having a relatively large image size such as DVD, MPEG-4 and one mode of H.264/AVC are used for media having a relatively small image size such as mobile phones or one-segment broadcasting, and H.264/AVC and VC-1 are used for media having a significantly large image size such as HDTV.

When a moving picture is coded, processing is performed by dividing the moving picture into processing-units called macroblocks (MB). MBs are made up of luminance components and chrominance components. There are four luminance components Y0, Y1, Y2, and Y3, and two chrominance components Cb and Cr. Each of the Y and C components includes the 64 pixel components of an 8 × 8 block.

Orthogonal transform is a process common to MPEG-1, MPEG-2, MPEG-4, H.264/AVC, and VC-1. Orthogonal transform is a process performed for each of the components Y0, Y1, Y2, Y3, Cb, and Cr, and is a technique for transforming a moving picture signal, which is a spatial component, into a frequency component. By performing orthogonal transform, a bias in data is created when a natural image, and the like, is transformed into frequency components, and this works effectively for the data compression in variable-length coding and the like. Furthermore, aside from the coding of moving pictures, such orthogonal transform technique is also a basic process used in audio compression, signal processing, and so on.

Orthogonal transform is different for each of the aforementioned coding standards. First, DCT (Discrete Cosine Transform) is used in MPEG-1, MPEG-2, and MPEG-4. Furthermore, Hadamard transform, integer accuracy orthogonal transform, and so on, are used in new coding standards such as H.264/AVC and VC-1. It should be noted that DCT is one of the most common orthogonal transforms, and is a lossy transform in which errors arise before and after transformation because the transform base includes decimal precision, whereas the orthogonal transform performed for H.264/AVC, VC-1, and so on, has a feature in which errors before and after transformation do not arise because the transform base is an integer.

FIGS. 1 to 8 are diagrams showing the conventional technique.

FIGS. 1 and 2 are diagrams showing a transform matrix of an orthogonal transform. The transform matrix in FIG. 1 is a transform matrix of an integer accuracy orthogonal transform in H.264/AVC. Furthermore, the transform matrix in FIG. 2 is a transform matrix of an integer accuracy orthogonal transform in VC-1. It should be noted that the latter transform matrix in FIG. 2 is a matrix expression based on a formula described in the written standard of the H.264/AVC Standard.

FIG. 3 and FIG. 4 are diagrams showing a 4 × 4 transform matrix.

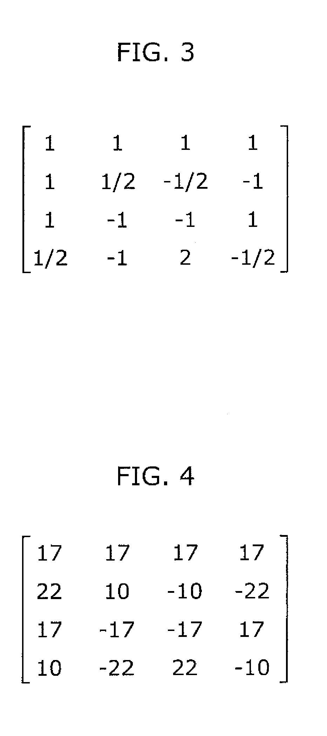

In H.264/AVC and VC-1, in addition to orthogonal transform on an 8 × 8 basis, orthogonal transform on a 4 × 4 basis is also performed in order to reduce the image error after decoding. The transform matrix in FIG. 3 is an orthogonal transform matrix on a 4 × 4 basis for reducing error in H.264/AVC. Meanwhile, the transform matrix in FIG. 4 is an orthogonal transform matrix on a 4 × 4 basis in VC-1.

Although orthogonal transform is expressed in the matrix format in this manner, it is a commonly known problem that, when implemented by performing a simple matrix calculation, a large amount of calculation is required and thus becomes a cause for increased processing time and circuit scale. As such, generally, matrix expansion is performed by making use of the properties of the matrix format, and processing is performed using a high-speed algorithm which reduces the number of calculations. Methods such as Chen and Wang are known as high-speed algorithms.

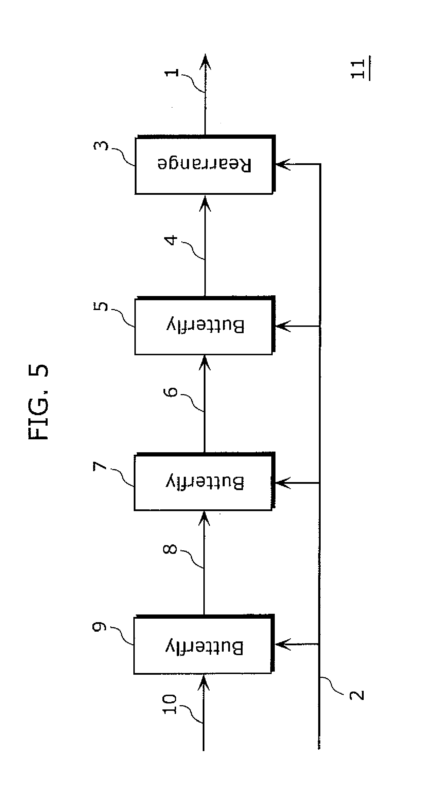

FIG. 5 shows a conventional configuration in which the high-speed algorithm for orthogonal transform described above is divided according to processing-units (see Patent Reference 1). In FIG. 5, rearranging of input signals is performed by a rearranging device 3. Orthogonal transform is implemented by performing addition/subtraction or multiplication on the rearranged input signals in butterfly devices 5, 7, and 9.

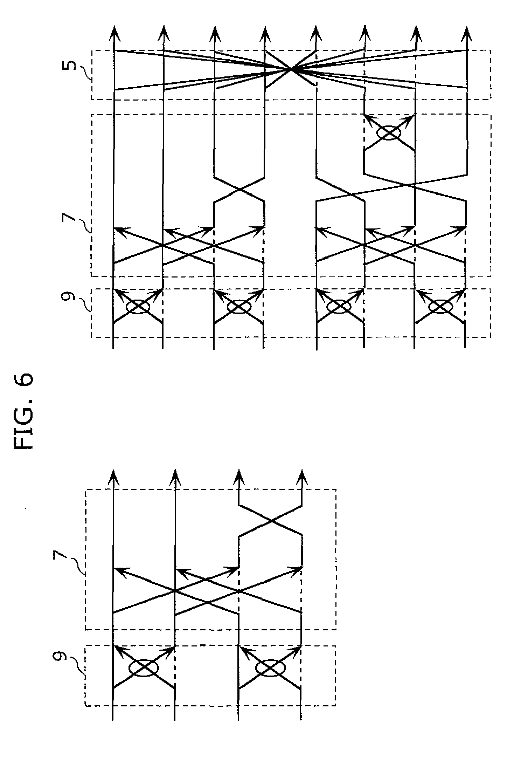

FIG. 6 is diagram showing the inner workings of the butterfly devices shown in FIG. 5.

As is clear from FIG. 6, the internal workings of the butterfly devices shown in FIG. 6 all include a number of two-input cross-multiplication calculating devices.

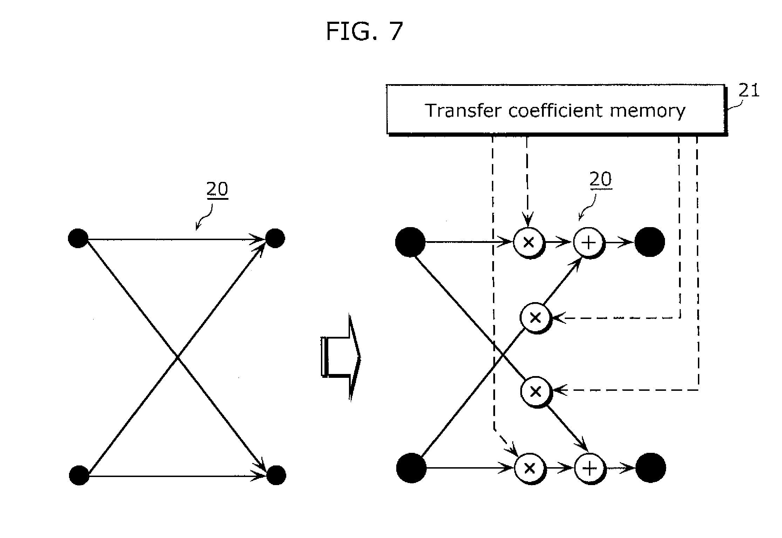

FIG. 7 is a diagram showing a two-input cross-multiplication calculating device (two-input basic calculating device) 20.

The illustration on the left side in FIG. 7 shows a symbol representing the two-input basic calculating device 20. In the above-described FIG. 6, the two-input cross-multiplication calculating devices are represented by this symbol. Furthermore, each of the diagrams referred to in the subsequent descriptions illustrate a two-input basic calculating device using this symbol.

Meanwhile, the illustration on the right side of FIG. 7 shows the processing in the two-input product-sum calculation performed by the two-input basic calculating device 20.

The two-input basic calculating device 20 performs product-sum calculation for a first input (input at the top-left black circle) and a second input (input at the bottom-left black circle) to the two-input basic calculating device 20, and outputs a first output (top-right black circle). More specifically, the two-input basic calculating device 20 performs the product-sum calculation (first input) × a11 + (second input) × a 12, and outputs the calculation result as the first output. Here, a11 and a12 in the above-described mathematical expression are coefficients obtained by the two-input basic calculating device 20 from a coefficient supplying unit, which supplies product-sum calculation coefficients, such as the transform coefficient memory 21 shown in FIG. 7. In the same manner, the two-input basic calculating device 20 performs the product-sum calculation (first input) × a11 + (second input) × a 12, and outputs the calculation result as the second output. In the symbol on the left in FIG. 7, each of the plural arrows connected to the black circle of the respective outputs represents such a product-sum calculation.

In existing coding standards such as MPEG-2, DCT processing is implemented using high-speed orthogonal transform algorithms such as that described above. Furthermore, in H.264/AVC, processing is generally implemented according to the procedure described in the written standards. With regard to VC-1, processing is generally implemented by directly performing matrix calculation since high-speed algorithms therefor are not generally known.

Here, the internal workings of the butterfly devices shown in FIG. 6 all include a number of two-input cross-multiplication calculating devices. As such, the orthogonal transform that can be implemented using the conventional configuration is limited to that which can be expanded using two-input cross-multiplication calculation such as DCT and Hadamard.

Meanwhile, H.264/AVC requires a three-input calculating device.

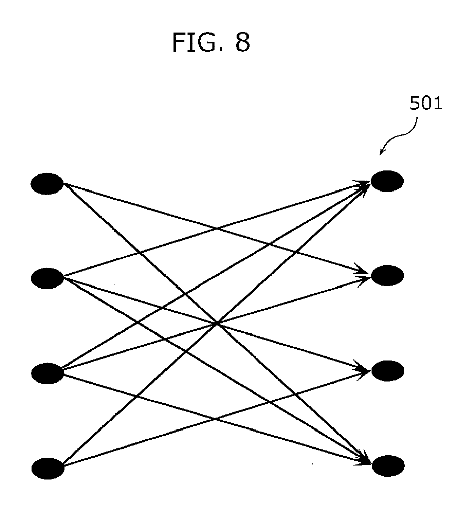

FIG. 8 is a diagram showing a three-input calculating device required in H.264/AVC orthogonal transform.

Consequently, in H.264/AVC, an orthogonal transform apparatus which uses a calculating device performing three-input cross-multiplication expanded to the configuration such as that shown in FIG. 8 is used. It should be noted that, with regard to VC-1, configuration using two-input cross multiplication is possible. However, the connections are different to that in the conventional configuration.
Patent Reference 1: Japanese Unexamined Patent Application Publication No. 4-229724

### Disclosure of Invention

### Problems that Invention is to Solve

However, there are cases where implementation of a program or circuit which performs processing in all of the plural coding standards is desired. In such cases, it is necessary to have separate programs or circuits for each coding standard. For example, implementation of complex and varied moving picture coding is required of recent semiconductor integrated circuits. Furthermore, lowering of power consumption is also essential. Amidst such a backdrop, having a circuit for each coding standard leads to an increase in the dimensions of the entire semiconductor integrated circuit, and becomes a hindrance to the implementation of plural moving picture coding. Furthermore, the increase in circuit scale also leads to an increase in power consumption and thus hinders the implementation of lowering of power consumption. Furthermore, even from the perspective of calculating devices, using calculating methods separately for each device is inefficient as it does not allow processing standardization, and is also a factor for the occurrence of errors in program management.

The present invention is conceived to solve the aforementioned problems and has as an object to provide an orthogonal transform apparatus which achieves program standardization and the reduction of the dimensions of the entire semiconductor integrated circuit, by implementing plural orthogonal transform processes using one common high-speed orthogonal transform algorithm calculating device or circuit configuration.

More specifically, the object of the present invention is to provide an orthogonal transform apparatus which performs a common high-speed orthogonal transform algorithm which can perform the orthogonal transform in new coding standards such as H.264/AVC or VC-1, and implement existing DCT processing such as that in MPEG-2 by merely changing transform coefficients, without changing the basic calculating unit and the connection relationship of the calculating device as in the conventional configuration.

### Means to Solve the Problems

In order to achieve the aforementioned object, the orthogonal transform apparatus in an aspect of the present invention is an orthogonal transform apparatus which performs orthogonal transform on plural input signals, the orthogonal transform apparatus including: a first butterfly calculating unit including a two-input basic calculating unit configured to perform a product-sum calculation of two inputs on input signals which are part of the plural input signals; a second butterfly calculating unit including a four-input basic calculating unit configured to perform a product-sum calculation of four inputs on input signals which are a remainder of the plural input signals; a third butterfly calculating unit including a two-input basic calculating unit configured to perform a product-sum calculation of two inputs on a result of the calculation by the second butterfly calculating unit; a first delaying unit configured to hold a result of the calculation by the first butterfly calculating unit; a first selecting unit configured to select data from between the result of the calculation by the first butterfly calculating unit and the result of the calculation held by the first delaying unit; a second delaying unit configured to hold a result of the calculation by the third butterfly calculating unit; a second selecting unit configured to select data from between the result of the calculation by the third butterfly calculating unit and the result of the calculation held by the second delaying unit; a fourth butterfly calculating unit including a two-input basic calculating unit configured to perform a product-sum calculation of two inputs on the data selected by the first selecting unit and the data selected by the second selecting unit; and a transform coefficient supplying unit configured to supply, to the first to fourth butterfly calculating units, transform coefficients to be used in the product-sum calculations by the first to fourth butterfly calculating units, wherein the second butterfly calculating unit is configured to switch the product-sum calculation performed by the four-input basic calculating unit of the second butterfly calculating unit, between a predetermined three-input calculation and a predetermined two-input calculation for performance of plural types of orthogonal transforms by the first to fourth butterfly calculating units.

Accordingly, it is possible to provide an orthogonal transform apparatus which can perform the orthogonal processing of new coding standards such as H.264/AVC or VC-1, and can also implement the processing for existing DCT orthogonal transforms such as in MPEG-2 by merely changing transform coefficients, and thus perform a high-speed orthogonal transform algorithm that is common to plural processes, without having to change the basic calculating unit and calculating device connection relationships as in the conventional configuration, since the calculations performed by the four-input basic calculating unit included in the second butterfly unit can be switched between a three-input calculation and a two-input calculation.

In addition, with this, it is possible to implement plural orthogonal transforms using one common high-speed orthogonal transform algorithm calculating unit or circuit configuration, and thus it is possible to achieve program standardization, reduction of dimensions of the entire semiconductor integrated circuit, lowering of power consumption, facilitation of the implementation of plural moving picture coding processes, and inhibition of error occurrence in the management of programs.

### Effects of the Invention

According to the above-described configuration, processing for plural orthogonal transforms, particularly orthogonal transforms having different base properties can be implemented using a common orthogonal transform unit. The effect thereof is allowing implementation of program standardization and reduction of dimensions of the entire semiconductor integrated circuit.

### Brief Description of Drawings

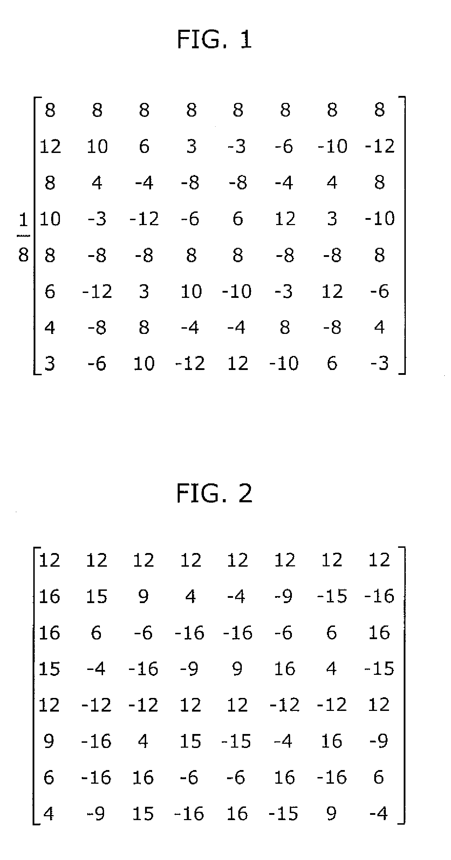

[FIG. 1] FIG. 1 is a diagram showing a transform matrix of an integer accuracy orthogonal transform in H.264/AVC.
[FIG. 2] FIG. 2 is a diagram showing a transform matrix of an integer accuracy orthogonal transform in VC-1.
[FIG. 3] FIG. 3 is a diagram showing a transform matrix of a 4 × 4 orthogonal transform in H.264/AVC.
[FIG. 4] FIG. 4 is a diagram showing a 4 × 4 transform matrix in VC-1.
[FIG. 5] FIG. 5 is a diagram showing a conventional configuration.
[FIG. 6] FIG. 6 is diagram showing the inner workings of butterfly devices included in the conventional configuration.
[FIG. 7] FIG. 7 is a diagram showing a two-input cross-multiplication calculating device (two-input basic calculating device).
[FIG. 8] FIG. 8 is a diagram showing a three-input calculating device required in H.264/AVC orthogonal transform.

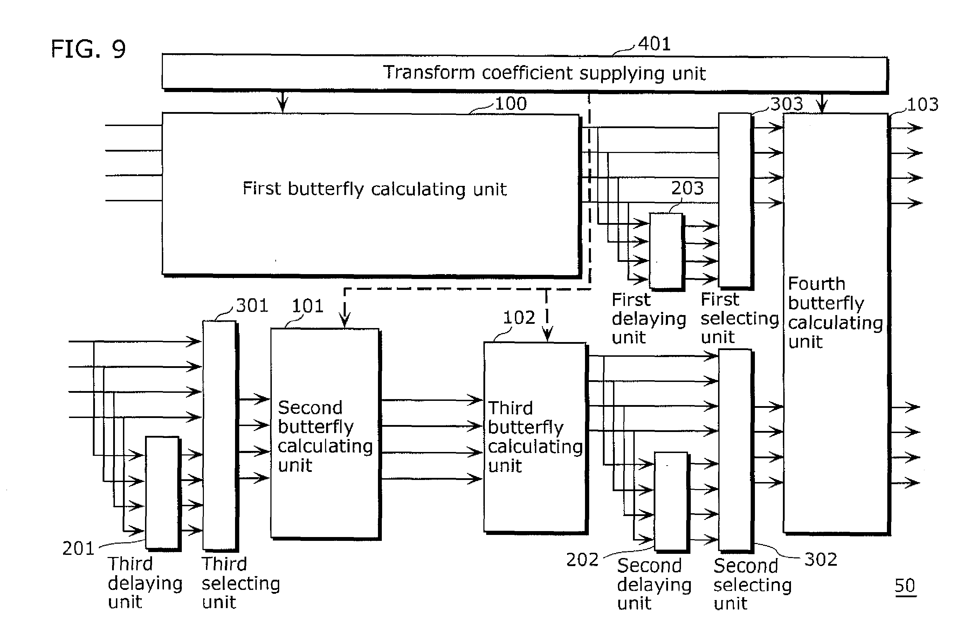

[FIG. 9] FIG. 9 is a diagram showing an orthogonal transform apparatus 50.

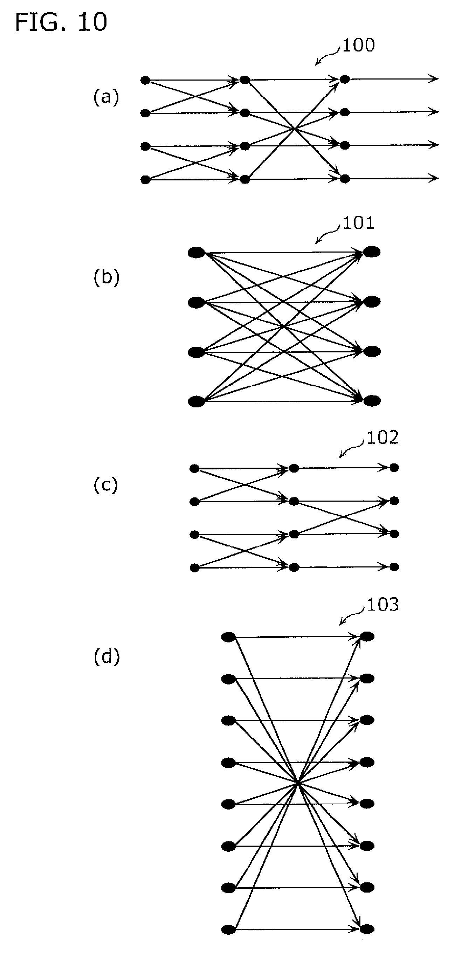

[FIG. 10] FIG. 10 is a diagram showing details of the four butterfly calculating units included in the orthogonal transform apparatus 50.

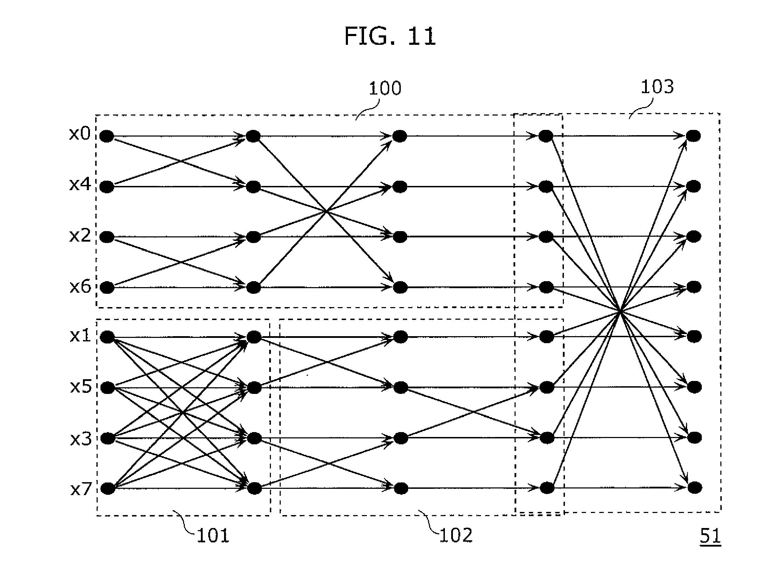

[FIG. 11] FIG. 11 is a diagram showing a 4-stage pipeline calculating circuit.

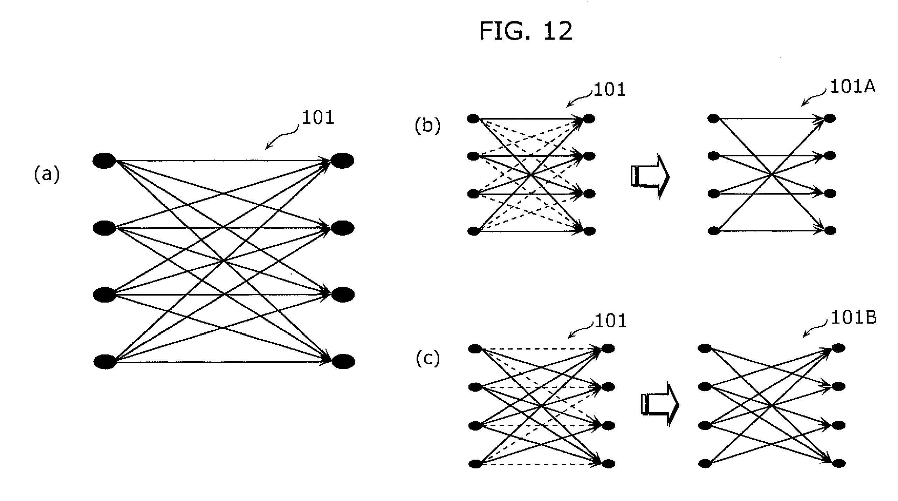

[FIG. 12] FIG. 12 is a diagram showing A-type and B-type second butterfly calculating units.

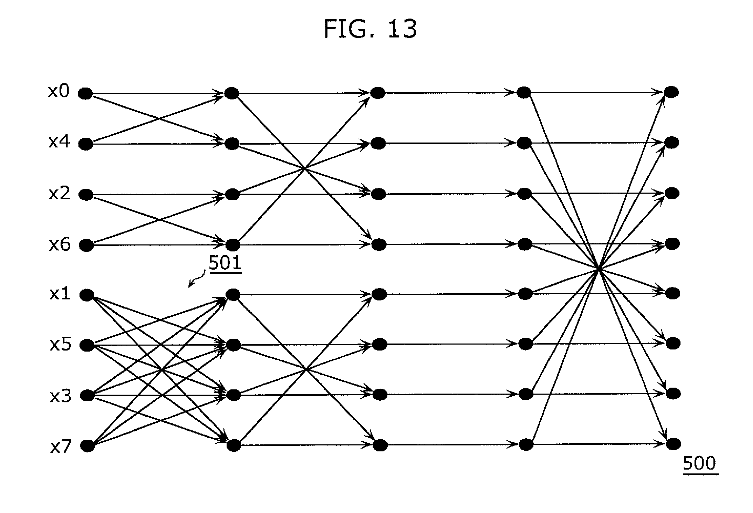

[FIG. 13] FIG. 13 is a diagram showing an H.264/AVC orthogonal transform calculating configuration.

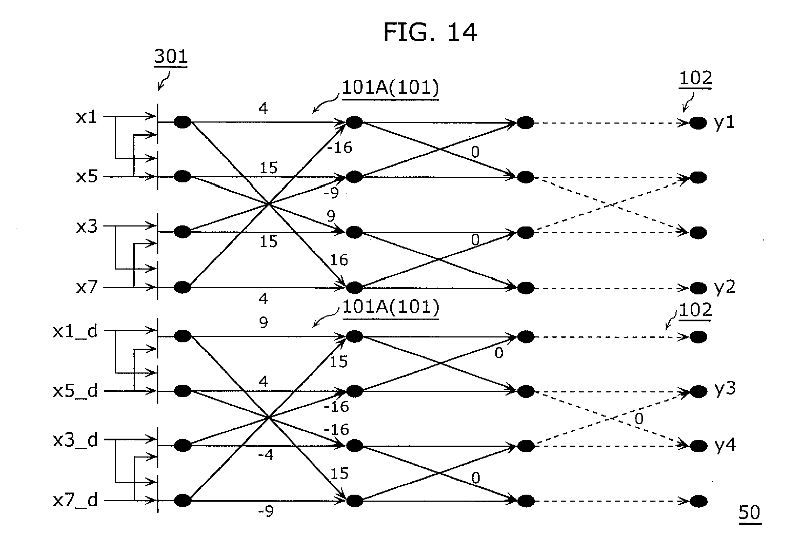

[FIG. 14] FIG. 14 is a diagram for describing the two rounds of calculations performed by a second butterfly calculating unit when an orthogonal transform apparatus performs the orthogonal transform in VC-1.

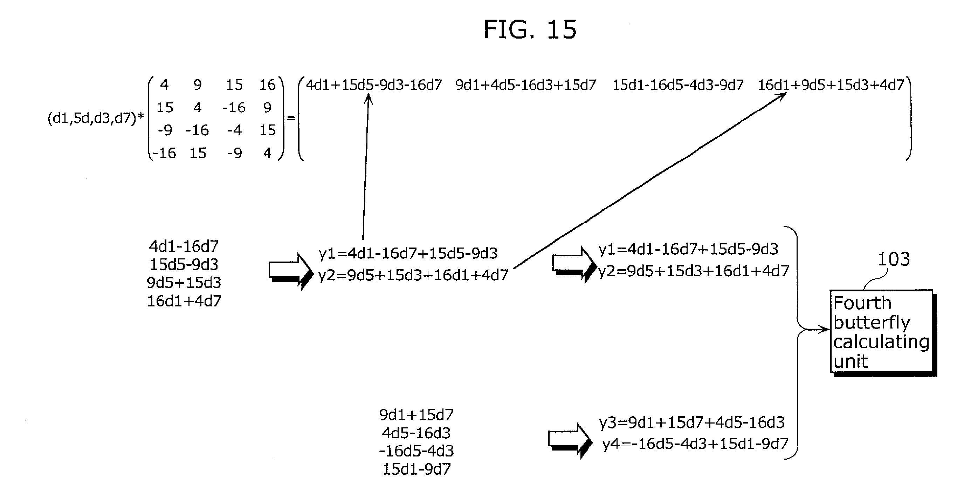

[FIG. 15] FIG. 15 is a diagram showing the equations for the two rounds of calculations performed by the second butterfly calculating unit when the orthogonal transform apparatus performs the orthogonal transform in VC-1.

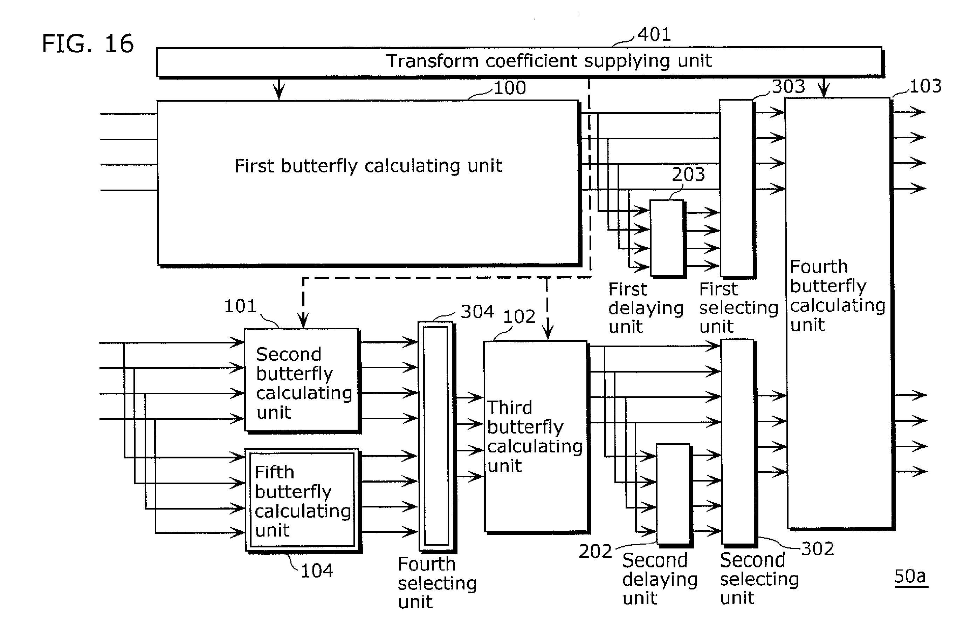

[FIG. 16] FIG. 16 is a diagram showing an orthogonal transform apparatus.

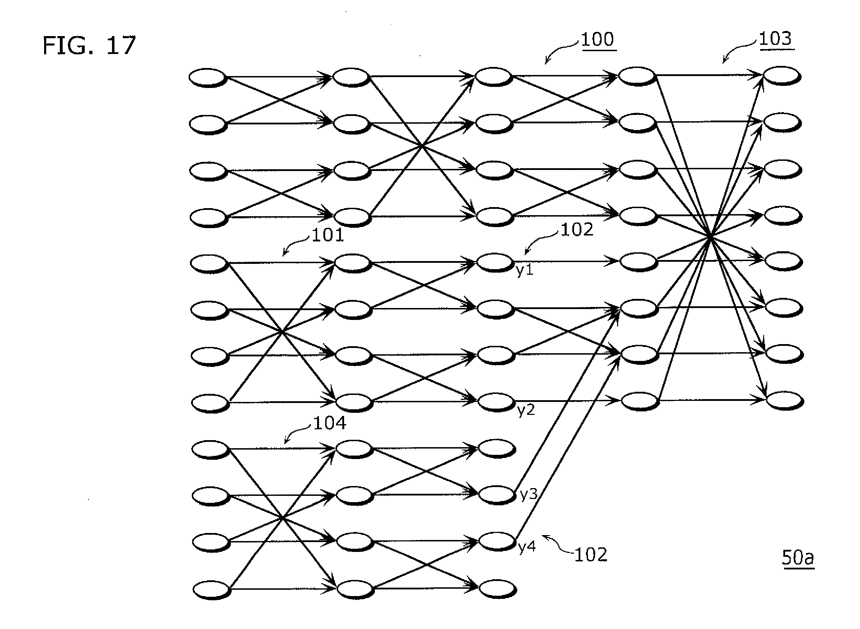

[FIG. 17] FIG. 17 is a diagram showing the flow of calculations when the orthogonal transform apparatus performs the orthogonal transform in VC-1.

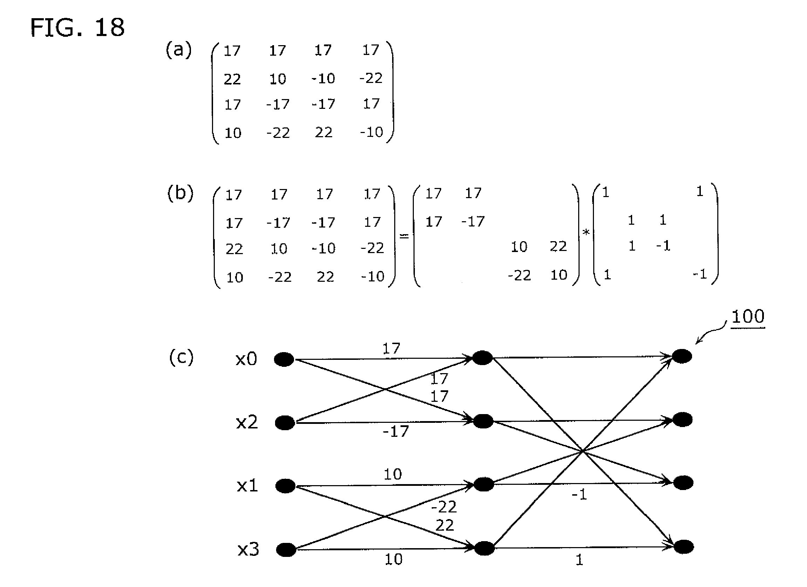

[FIG. 18] FIG. 18 is diagram showing an embodiment in which 4 × 4 orthogonal transform is performed.

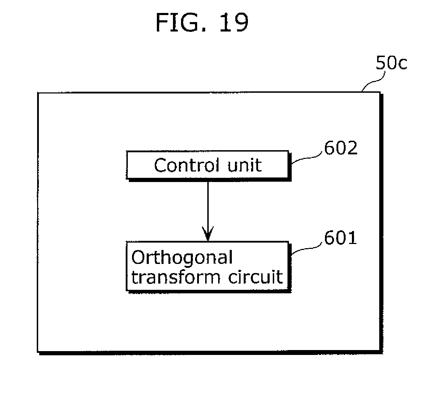

[FIG. 19] FIG. 19 is a diagram showing an integrated circuit.

### Numerical References

- 11: Conventional configuration
- 20: two-input basic calculating unit
- 50: Orthogonal transform apparatus
- 50a: Orthogonal transform apparatus
- 50c: Integrated circuit
- 51: 4-stage pipeline calculating circuit
- 100: First butterfly calculating unit
- 101: Second butterfly calculating unit
- 101A: A-type second butterfly calculating unit
- 101B: B-type second butterfly calculating unit
- 102: Third butterfly calculating unit
- 103: Fourth butterfly calculating unit
- 104: Fifth butterfly calculating unit
- 201: Third delaying unit
- 202: Second delaying unit
- 203: First delaying unit
- 301: Third selecting unit
- 302: Second selecting unit
- 303: First selecting unit
- 304: Fourth selecting unit
- 401: Transform coefficient supplying unit
- 500: H.264/AVC orthogonal transform calculating configuration
- 501: Calculating circuit 501 which performs three-input cross-multiplication
- 601: Orthogonal transform circuit
- 602: Control unit

### Best Mode for Carrying Out the Invention

Hereinafter, embodiments of the orthogonal transform apparatus and integrated circuit in the present invention shall be described with reference to the drawings.

### (First Embodiment)

FIG. 9 is a diagram showing an orthogonal transform apparatus 50.

The orthogonal transform apparatus 50 performs orthogonal transform on plural input signals. Although having a simple configuration, the orthogonal transform apparatus 50 also performs any of the orthogonal transforms among the three types of orthogonal transforms of the orthogonal transform in DCT, the orthogonal transform in H.264/AVC, and the orthogonal transform in VC-1. It should be noted that the orthogonal transform apparatus 50 performs calculation that utilizes Chen's method in the basic algorithm.

Specifically, the orthogonal transform apparatus 50 includes a first butterfly calculating unit 100, a second butterfly calculating unit 101, a third butterfly calculating unit 102, a fourth butterfly calculating unit 103, a fifth butterfly calculating unit 104, a third delaying unit 201, a second delaying unit 202, a first delaying unit 203, a third selecting unit 301, a second selecting unit 302, a first selecting unit 303, a fourth selecting unit 304, and a transform coefficient supplying unit 401.

FIG. 10 is a diagram showing details of the first butterfly calculating unit 100 to the fourth butterfly calculating unit 103 shown in FIG. 9. In FIG. 10, (a) to (d) show the details of the first butterfly calculating unit 100, the second butterfly calculating unit 101, the third butterfly calculating unit 102, and the fourth butterfly calculating unit 103, respectively.

It should be noted that the orthogonal transform apparatus 50 may be an image display apparatus such as a television which performs orthogonal transform to display moving pictures. It may be a moving picture recording apparatus such as a DVD recorder which performs orthogonal transform in order to record moving pictures. It may be a moving picture imaging apparatus such as a movie camera which performs orthogonal transform in order to record imaged moving pictures, and it may also be a moving picture coding apparatus, for example.

The first butterfly calculating unit 100 ((a) in FIG. 10, and FIG. 9) has two-input basic calculating units which perform two-input product-sum calculation on a part of input signals among plural input signals to the orthogonal transform apparatus 50. It should be noted that a two-input basic calculating unit means the two-input basic calculating unit 20 described using FIG. 7. Specifically, the first butterfly calculating unit 100 includes four two-input basic calculating units configured as shown in (a) in FIG. 10. Using these four two-input basic calculating units, the first butterfly calculating unit 100 performs calculation on even-numbered input signals among the plural input signals to the orthogonal transform apparatus 50.

The third delaying unit 201 (FIG. 9) holds the remaining input signals among the plural input signals to the orthogonal transform apparatus 50. Here, remaining input signals means the input signals that remain when the aforementioned even-numbered input signals, that is, the input signals on which calculation is to be performed by the first butterfly calculating unit 100 are excluded, among the plural input signals to the orthogonal transform apparatus 50. In other words, the odd-numbered input signals. The third selecting unit 301 (FIG. 9) selects data from the remaining input signals among the plural input signals to the orthogonal transform apparatus 50 and the input signals held by the first delaying unit 203. Here, remaining input signals are the same as in the above-described case, and means the odd-numbered input signals. When the orthogonal transform apparatus 50 performs the orthogonal transform in DCT, and when the orthogonal transform apparatus 50 performs the orthogonal transform in H.264/AVC, among the above-described three types of orthogonal transform, the third selecting unit 301 selects the odd-numbered input signals to the orthogonal transform apparatus 50. On the other hand, when the orthogonal transform apparatus 50 performs the orthogonal transform in VC-1, the third selecting unit 301 switches between selecting the odd-numbered input signals to the orthogonal transform apparatus 50 and selecting the input signals held by the first delaying unit 203.

The second butterfly calculating unit 101 ((b) in FIG. 10, and FIG. 9) has a four-input basic calculating unit which performs four-input product-sum calculation on the remaining input signals among the plural input signals to the orthogonal transform apparatus 50. The second butterfly calculating unit 101 performs product-sum calculation on data selected by the third selecting unit 301 (FIG. 9). The second butterfly calculating unit 101 performs the calculation on the remaining input signals when the third selecting unit 301 selects the remaining input signals among the plural input signals to the orthogonal transform apparatus 50, and performs the calculation on the input signals held by the first delaying unit 203 when the third selecting unit 301 selects the input signals held by the first delaying unit 203.

Here, the four-input basic calculating unit is a basic calculating unit which is made to have four inputs as compared to the two-input basic calculating unit (two-input basic calculating device) shown in FIG. 7 which is a basic calculating unit having two inputs. Based on the first to fourth inputs (the inputs at the four black circles on the left side shown in the second butterfly calculating unit 101 in (b) in FIG. 10), the four-input basic calculating unit outputs the respective calculation result for the product-sum calculation on these four inputs as the first to fourth outputs (the outputs at the four black circles on the right side). In other words, the four-input basic calculating unit includes four structures which add the results of calculation on the four input signals and four transform coefficients.

The third butterfly calculating unit 102 ((c) in FIG. 10, and FIG. 9) has two-input basic calculating units which perform two-input product-sum calculation on the results of the calculation by the second butterfly calculating unit 101. The third butterfly calculating unit 102 has three two-input basic calculating units that are configured as shown in (c) in FIG. 10.

The first delaying unit 203 (FIG. 9) holds the results of the calculation by the first butterfly calculating unit 100.

The second delaying unit 202 (FIG. 9) holds the results of the calculation by the third butterfly calculating unit 102.

The first selecting unit 303 (FIG. 9) selects data from the results of the calculation by the first butterfly calculating unit 100 and the calculation results held by the first delaying unit 203. When the orthogonal transform apparatus 50 performs the orthogonal transform in DCT, and when the orthogonal transform apparatus 50 performs the orthogonal transform in H.264/AVC, out of the three types of orthogonal transform, the first selecting unit 301 selects the results of the calculation by the first butterfly calculating unit 100. On the other hand, when the orthogonal transform apparatus 50 performs the orthogonal transform in VC-1, the first selecting unit 303 selects calculation results held by the first delaying unit 203.

The second selecting unit 302 (FIG. 9) selects data from the results of the calculation by the third butterfly calculating unit 102 and the calculation results held by the second delaying unit 202. When the orthogonal transform apparatus 50 performs the orthogonal transform in DCT, and when the orthogonal transform apparatus 50 performs the orthogonal transform in H.264/AVC, out of the three types of orthogonal transform, the second selecting unit 302 selects the results of the calculation by the third butterfly calculating unit 102. When the orthogonal transform apparatus 50 performs the orthogonal transform in VC-1, the second selecting unit 302 selects data resulting from the gathering of two portions, namely a first and a second portion, in which a part of the results of the calculation by the third butterfly calculating unit 102 is included in the first portion and the calculation results held by the second delaying unit 202 is included in the second portion. Details of this shall be shown in the subsequent descriptions (see FIG. 14 and FIG. 15).

The fourth butterfly calculating unit 103 ((d) in FIG. 10, and FIG. 9) has two-input basic calculating units which perform two-input product-sum calculation on the data selected by the first selecting unit 303 and the data selected by the second selecting unit 302. The third butterfly calculating unit 102 includes four two-input basic calculating units configured as shown in (c) in FIG. 10.

The transform coefficient supplying unit 401 (FIG. 9) supplies the coefficients to be used in the product-sum calculations by the first butterfly calculating unit 100 to the fourth butterfly calculating unit 103, to the first butterfly calculating unit 100 to the fourth butterfly calculating unit 103. The transform coefficient supplying unit 401 changes the coefficients to be supplied to the first butterfly calculating unit 100 to the fourth butterfly calculating unit 103 on a per processing-unit basis of the product-sum calculations that are repeated by the first butterfly calculating unit 100 to the fourth butterfly calculating unit 103. When the orthogonal transform apparatus 50 performs the orthogonal transform in DCT, the transform coefficient supplying unit 401 supplies the transform coefficients for the performance of the orthogonal transform by the first butterfly calculating unit 100 to the fourth butterfly calculating unit 103. The transform coefficient supplying unit 401 supplies the transform coefficients for the performance of the orthogonal transform in H.264/AVC when the orthogonal transform in H.264/AVC is to be performed, and supplies the transform coefficients for the performance of the orthogonal transform in VC-1 when the orthogonal transform in VC-1 is to be performed. In other words, the transform coefficient supplying unit 401 supplies the respective transform coefficients for the type of orthogonal transform to be performed, in accordance to the type of the orthogonal transform to be performed by the orthogonal transform apparatus 50.

It should be noted that at least part of the first delaying unit 203, the second delaying unit 202, and the third delaying unit 201 may be configured of a buffer, a memory, or a register, for example.

Here, stated differently, the first selecting unit 303 selects either the results of the calculation by the first butterfly calculating unit 100 or the calculation results held by the first delaying unit 203. In the same manner, the second selecting unit 302 selects either the results of the calculation by the third butterfly calculating unit 102 or the calculation results held by the second delaying unit 202. Furthermore, the third selecting unit 301 selects either the remaining input signals among the plural input signals to the orthogonal transform apparatus 50 or the input signals held by the first delaying unit 203.

The four calculating units of the first butterfly calculating unit 100 to the fourth butterfly calculating unit 103 taken altogether configure a 4-stage pipeline calculating circuit 51 (FIG. 11).

FIG. 11 is a diagram showing the 4-stage pipeline calculating circuit 51.

The 4-stage pipeline calculating circuit 51 is configured of the totality of the first butterfly calculating unit 100, the second butterfly calculating unit 101, the third butterfly calculating unit 102, and the fourth butterfly calculating unit 103. It should be noted that illustration of the 4-stage pipeline calculating circuit 51 has been omitted in FIG. 9. In the 4-stage pipeline calculating circuit 51, the part of the second butterfly calculating unit 101 is different from that in a 4-stage pipeline calculating circuit for a Chen's high-speed algorithm-based DCT orthogonal transform, and other parts, that is, the respective parts of the first butterfly calculating unit 100, the third butterfly calculating unit 102, and the fourth butterfly calculating unit 103 are the same as their corresponding parts in Chen's 4-stage pipeline calculating circuit. Therefore, the 4-stage pipeline calculating circuit 51 is implemented by dividing a Chen's high-speed algorithm-based 4-stage pipeline calculating circuit into portions corresponding to the four areas of the first butterfly calculating unit 100, the second butterfly calculating unit 101, the third butterfly calculating unit 102, and the fourth butterfly calculating unit 103, and replacing the portion corresponding to the second butterfly calculating unit 101 with the second butterfly calculating unit 101.

Hereinafter, the first butterfly calculating unit 100 to the fourth butterfly calculating unit 103 are described in more detail through their relationship with Chen's 4-stage pipeline calculating circuit. The first butterfly calculating unit 100 is the same circuit as the circuit in the area which processes even-numbered input signals, among the first to third stages of Chen's 4-stage pipeline calculating circuit. The second butterfly calculating unit 101 is the same circuit as the part which processes the odd-numbered input signals, out of the first stage of Chen's 4-stage pipeline calculating circuit. The third butterfly calculating unit 102 is the same as the part which processes odd-numbered input signals, among the parts of the second to third stages of Chen's 4-stage pipeline calculating circuit. The fourth butterfly calculating unit 103 is the same as the part of the fourth stage of Chen's 4-stage pipeline calculating circuit.

As described above, the orthogonal transform apparatus 50 is configured by dividing a high-speed algorithm orthogonal transform apparatus performing orthogonal transform processing on input signals that have been processed in some way, into the four butterfly calculating units 100 to 103 which are configured of two-input basic calculating units and four-input calculating units performing product-sum calculation. In addition, the orthogonal transform apparatus 50 includes: in the inputs of the butterfly calculating units 101 and 103, delaying units 203, 202, and 201 which delay the input signals, and selecting units 301, 302, and 303 which select the inputs to the butterfly calculating units 101 to 103 by selecting between the outputs of the delaying units and the input signals or the calculation result from the butterfly calculating unit; and a transform coefficient supplying unit 401 which supplies transform coefficients for orthogonal transform to the respective butterfly calculating units.

Next, the operation of the orthogonal transform apparatus 50 having such a configuration shall be described. First, the operation in the performance of orthogonal transform by the orthogonal transform apparatus 50 shall be described.

FIG. 12 is a diagram showing an A-type second butterfly calculating unit 101A and a B-type second butterfly calculating unit 101B which are obtained by modifying the second butterfly calculating unit 101. (a) in FIG. 12 is an illustration which shows once again the configuration of the second butterfly calculating unit 101 shown in (b) in FIG. 10 and in FIG. 11. (b) in FIG. 12 is an illustration showing the A-type second butterfly calculating unit 101A (right side of (b) in FIG. 12) which is a modification of the second butterfly calculating unit 101. (c) in FIG. 12 is an illustration showing the B-type second butterfly calculating unit 101B (right side of (c) in FIG. 12) which is a modification of the second butterfly calculating unit 101.

The second butterfly calculating unit 101 changes form to the A-type second butterfly calculating unit 101A in (b) in FIG. 12 when the orthogonal transform apparatus 50 performs the orthogonal transform in DCT.

The A-type second butterfly calculating unit 101A is a calculating circuit which is a combination of two two-input basic calculating units. Specifically, one two-input basic calculating unit out of the two two-input basic calculating units has the second input and the third input to the second butterfly calculating unit 101 as a first input and a second input, respectively, and has the second output and the third output of the second butterfly calculating unit 101 as a first output and a second output, respectively. Furthermore, the other two-input basic calculating unit has the first input, the fourth input, the first output, and the fourth output of the second butterfly calculating unit 101 as a first input, a second input, a first output, and a second output, respectively.

Here, the A-type second butterfly calculating unit 101A has the same configuration as the part corresponding to the second butterfly calculating unit 101 in Chen's 4-stage pipeline calculating circuit.

As such, by having the DCT transform coefficients supplied by the transform coefficient supplying unit 401 and by having the second butterfly calculating unit 101 change to the form of the A-type second butterfly calculating unit 101A described above with reference to (b) in FIG. 12, the first butterfly calculating unit 100 to the fourth butterfly calculating unit 103, that is, the 4-stage pipeline calculating circuit 51 is able to perform the product-sum calculation for the orthogonal transform according to the high-speed algorithm of Chen, and implement the orthogonal transform in DCT used in MPEG-1, MPEG-2, and MPEG-4.

It should be noted that as a method for the form-changing of the second butterfly calculating unit 101 to the A-type second butterfly calculating unit 101A, for example, it is possible to perform a method of changing form that is based on a transform coefficient 0 supplied by the transform coefficient supplying unit 401, it is also possible to perform a method of changing form by selecting and outputting 0 instead of outputting a calculation result, and changing form may also be perform by other methods.

Here, in the case of changing form by receiving a transform coefficient 0, the second butterfly calculating unit 101 changes form by receiving, from the transform coefficient calculating unit 401, a value 0 for the transform coefficients of the multiplication shown by the broken lines included in the second butterfly calculating unit 101 on the left side of (b) in FIG. 12.

Next, the operation for H.264/AVC shall be described.

The second butterfly calculating unit 101 changes form to the B-type second butterfly calculating unit 101B in (c) in FIG. 12 when the orthogonal transform apparatus 50 performs the orthogonal transform in DCT.

The B-type second butterfly calculating unit 101B is the same circuit as a calculating circuit 501 which performs three-input cross-multiplication required in the orthogonal transform in H.264/AVC shown in above-described FIG. 8.

FIG. 13 is a diagram showing an H.264/AVC orthogonal transform calculating configuration 500 which is a 4-stage pipeline calculating circuit which performs the orthogonal transform in H.264/AVC.

The H.264/AVC orthogonal transform calculating configuration 500 includes a calculating circuit which performs the three-input cross multiplication shown in aforementioned FIG. 8, in the area illustrated in the bottom-left of FIG. 13, that is, the area corresponding to the position of the second butterfly calculating unit 101.

The 4-stage pipeline calculating circuit 51 in the present embodiment becomes equivalent to the H.264/AVC orthogonal transform calculating configuration shown in FIG. 5, by the changing of the second butterfly calculating unit 101 to the form of the B-type second butterfly calculating unit 101B which is the same as the calculating circuit 501 in FIG. 13.

As such, by having the H.264/AVC transform coefficients supplied by the transform coefficient supplying unit 401 and by having the second butterfly calculating unit 101 change to the form of the B-type second butterfly calculating unit 101B shown in (c) in FIG. 12, the 4-stage pipeline calculating circuit 51 is able to implement the orthogonal transform (integer precision orthogonal transform) used in H.264/AVC.

It should be noted that as a method for the form-changing of the second butterfly calculating unit 101 to the B-type second butterfly calculating unit 101B in (c) in FIG. 12, it is possible to perform a method of changing form that is based on a transform coefficient 0 supplied by the transform coefficient supplying unit 401 to the second butterfly calculating unit 101, it is also possible to perform a method of changing form by selecting and outputting 0 instead of outputting a calculation result, and changing form may also be perform by other methods.

Next, the operation for the orthogonal transform in VC-1 shall be described.

The second butterfly calculating unit 101 performs the two rounds of calculations of a first round and a second round, when the orthogonal transform apparatus 50 performs the orthogonal transform in VC-1.

FIG. 14 is a diagram for describing the two rounds of calculations performed by the second butterfly calculating unit 101 when the orthogonal transform apparatus 50 performs the orthogonal transform in VC-1.

FIG. 15 is a diagram showing equations for the two rounds of calculations performed by the second butterfly calculating unit 101 when the orthogonal transform apparatus 50 performs the orthogonal transform in VC-1.

x1, x3, x5, and x7 shown in the left-most end of the top stage in FIG. 14 are the even-numbered input signals among the input signals to the orthogonal transform apparatus 50. Meanwhile, x1_d, x5_d, x3_d, and x7_d shown on the left-most end of the bottom stage in FIG. 14 are the input signals held by the third delaying unit 201 (FIG. 9). In addition, d1, d3, d5, and d7 in FIG. 15 indicate respectively the same signal as the input signals illustrated by x1, x3, x5, and x7 in FIG. 14

The top stage in FIG. 14 shows the first round of calculation performed by the second butterfly calculating unit 101, and the bottom stage shows the second round of calculation performed by the second butterfly calculating unit 101. It should be noted that the second butterfly calculating unit 101 in the top and bottom stages in FIG. 14 changes form to the A-type second butterfly calculating unit 101A since the orthogonal transform apparatus 50 is performing the orthogonal transform in VC-1.

The first round of calculation performed by the second butterfly calculating unit 101 is as described below.

When the second butterfly calculating unit 101 performs the first round of calculation, the third selecting unit 301 selects, as the data on which the second butterfly calculating unit 101 performs calculating, the input signals to the orthogonal transform apparatus 50 instead of the input signals held by the first delaying unit 203. Specifically, in the first round of calculation, the third selecting unit 301 selects x1, x5, x3, x7 shown in the left end of the top stage in FIG. 14. In the first round of calculation, the second butterfly calculating unit 101 performs the respective product-sum calculations for 4 × d1 - 16 × d7, 15 × d5 - 9 × d3, 9 × d5 + d3, and 16 × d1 + 4 × d7. The transform coefficient supplying unit 401 supplies the transform coefficients in the first round of calculation, to the second butterfly calculating unit 101 performing such calculation.

In the first round of calculation, the third butterfly calculating unit 102 performs calculation on the calculation result of the above-described calculation by the second butterfly calculating unit 101, and specifically performs the calculations y1 = (4 × d1 - 16 × d7) + (15 × d5 - 9 × d3) and y2 = (9 × d5 - 15 × d3) + (16 × d1 - 4 × d7) shown in the center of FIG. 15. It should be noted that, at this time, together with outputting the above-described calculation results for y1 and y2 as a first output and a fourth output, respectively, the third butterfly calculating unit 102 outputs 0 as a second output and a third output, as represented by the 0 indicated by the second butterfly calculating unit 101 in the top stage in FIG. 14. The transform coefficient supplying unit 401 supplies the transform coefficients for performing the calculations, to the third butterfly calculating unit 102, at the time of the first round of calculation.

The third delaying unit 201 holds the aforementioned d1, d3, d5, d7, or stated differently, x1, x3, x5, and x7 (left end of the top stage in FIG. 14), during the first round of calculations by the second butterfly calculating unit 101 and the third butterfly calculating unit 102.

Meanwhile, the second round of calculation performed by the second butterfly calculating unit 101 is as described below.

The third selecting unit 301 selects d1, d3, d5, d7 held by the third delaying unit 201 during the above-described calculations, when the second butterfly calculating unit 101 and the third butterfly calculating unit 102 perform the second round of calculations. It should be noted that x1_d, x5_d, x3_d, and x7_d shown on the left end of the bottom stage in FIG. 14 indicate the currently selected d1, d3, d5, and d7, respectively.

In the second round of calculation, the second butterfly calculating unit 101 performs the calculations 9 × d1 + 15 × d7, 4 × d5 - 16 × d3, -16 × d5 - 4 × d3, and 15 × d1 - 9 × d7, as shown in the bottom stage in FIG. 15. The transform coefficient supplying unit 401 supplies the transform coefficients in the second round of calculation, to the second butterfly calculating unit 101 performing such calculation.

As the second round of calculation, the third butterfly calculating unit 102 performs the calculations y3 = (9 × d1 + 15 × d7) + (4 × d5 - 16 × d3) and y4 = (-16 × d5 - 4 × d3) + (15 × d1 - 9 × d7), based on the result of the calculation by the second butterfly calculating unit 101.

It should be noted that, the transform coefficient supplying unit 401 supplies the second butterfly calculating unit 101 with transform coefficients that are different to those supplied to the second butterfly calculating unit 101 in the first round of calculation. In the same manner, the transform coefficient supplying unit 401 supplies the third butterfly calculating unit 102 with transform coefficients that are mutually different for the first round of calculation and the second round of calculation.

The first delaying unit 203 (FIG. 9) holds the calculation result for calculation which the first butterfly calculating unit 100 performs in parallel when the second butterfly calculating unit 101 and the third butterfly calculating unit 102 perform the first round of calculation.

The second delaying unit 202 holds the calculation result of the calculation performed by the second butterfly calculating unit 101 and the third butterfly calculating unit 102 in the first round of calculation, that is, the calculation result which is the output of the third butterfly calculating unit 102 in the first round of calculation. The second delaying unit 202 performs such holding until the second butterfly calculating unit 101 and the third butterfly calculating unit 102 finish the second round of calculation.

Since the transform apparatus 50 performs the orthogonal transform in VC-1 when the second butterfly calculating unit 101 performs the second round of calculation, the first selecting unit 303 selects the calculation result held by the first delaying unit 203.

The second selecting unit 302 selects, as the data to be used in the calculation by the fourth butterfly calculating unit 103, y3 and y4 shown in the bottom stage in FIG. 15 and FIG. 14, and y1 and y2 shown in the top stage in FIG. 15 and FIG. 14 and held by the second delaying unit 202 from the first round of calculation. Specifically, the second selecting unit 302 selects, as the data to be used by the fourth butterfly calculating unit 103, data resulting from the gathering of a first portion including y1 and y2, and a second portion including y3 and y4, that is, data including y1, y2, y3, and y4.

By using the data selected by the second selecting unit 302 in the aforementioned manner, the fourth butterfly calculating unit 103 uses, in the calculating, the four data of y1, y2, y3, and y4 out of the results of the calculations by the second butterfly calculating unit 101 and the third butterfly calculating unit 102.

As such, it is possible to implement the orthogonal transform (integer precision orthogonal transform) used in VC/1 by having the VC-1 transform coefficients supplied by the transform coefficient supplying unit 401, by having the second butterfly calculating unit 101 change to the form of the A-type second butterfly calculating unit 101A shown in FIG. 12, and in addition, with the use of the third delaying unit 201 shown in FIG. 14, inputting the input signals two times and having the transform coefficient supplying unit 401 change the transform coefficients for the first round and the second round and supply the changed transform coefficients, and then performing the calculation.

It should be noted that as a method for the form-changing of the second butterfly calculating unit 101 to the A-type second butterfly calculating unit 101A, it is possible to perform a method of changing from that is based on a transform coefficient 0 supplied by the transform coefficient supplying unit 401, it is also possible to perform a method of changing form by selecting and outputting 0 instead of outputting a calculation result, and changing form may also be perform by other methods.

It should be noted that, in this manner, the orthogonal transform apparatus 50 performs the calculation in the bottom stage (the odd-numbered part), not by butterfly processing but by direct matrix calculation, by using the second butterfly calculating unit 101 and the third delaying unit 201 and inputting the odd-numbered input signals to the second butterfly calculating unit 101 two times and sequentially replacing the transform coefficients each time.

Furthermore, the second butterfly calculating unit 101 switches the product-sum calculation performed by the four-input basic calculating unit of the second butterfly calculating unit 101, between the predetermined three-input calculation (calculation in (b) in FIG. 12) and the two-input calculation (calculation in (a) in FIG. 12) for the performance of the plural types of orthogonal transforms by the 4-stage pipeline calculating circuit 51.

### (Second Embodiment)

Next, a second embodiment shall be described hereafter.

FIG. 16 is a diagram showing an orthogonal transform apparatus 50a according to the second embodiment.

The orthogonal transform apparatus 50a further includes a fifth butterfly calculating unit 104 and a fourth selecting unit 304, in addition to the configuration in the first embodiment.

The fifth butterfly calculating unit 104 has a four-input basic calculating unit which performs four-input product-sum calculation on the remaining input signals among the aforementioned plural input signals. The fifth butterfly calculating unit 104 is placed in parallel with the second butterfly calculating unit 101 described in the first embodiment, and has the same configuration as that of the second butterfly calculating unit 101 (see (b) in FIG. 10).

The fourth selecting unit 304 selects data from the results of the calculations by the second butterfly calculating unit 101 and the fifth butterfly calculating unit 104. The transform coefficient supplying unit 401 supplies, to the fifth butterfly calculating unit 104, transform coefficients to be used in the product-sum calculation by the fifth butterfly calculating unit 104. The third butterfly calculating unit 102 performs product-sum calculation on the data selected by the fourth selecting unit 304.

The second butterfly calculating unit 101 performs the first round of calculation performed by the second butterfly calculating unit 101 in the previously described first embodiment.

The fifth butterfly calculating unit 104 performs the second round of calculation performed by the second butterfly calculating unit 101 in the first embodiment.

FIG. 17 is a diagram showing the flow of calculations when the orthogonal transform apparatus 50a performs the orthogonal transform in VC-1. The second butterfly calculating unit 101 and the third butterfly calculating unit 102 shown in the middle stage in FIG. 17 indicate the first round of calculation in the first embodiment that each performs, that is, the calculations for which the calculation results are y1 and y2 (see FIG. 14 and FIG. 15). The fifth butterfly calculating unit 104 and the third butterfly calculating unit 102 shown in the bottom stage in FIG. 17 indicate the second round of calculation in the first embodiment that each performs, that is, the calculations for which the calculation results are y3 and y4 (see FIG. 14 and FIG. 15).

The fourth butterfly calculating unit 103 performs calculation based on both the calculation results in the middle stage and the bottom stage in FIG. 17, that is, y1 and y2, and y3 and y4.

With the orthogonal transform apparatus 50a, the high-speed algorithm orthogonal transform apparatus includes: the five butterfly calculating units represented by 101, 104, 102, 103, and 100 which are configured of two-input basic calculating units and four-input basic calculating units performing product-sum calculation; the second delaying unit 202 and the first delaying unit 203 which are provided at the input of the fourth butterfly calculating unit 103 and which delay input signals; selecting units 302, 303, 304 which select the input to the butterfly calculating units 102 to 103 by selecting data from between the output from the delaying units and the output from the butterfly calculating units; and the transform coefficient supplying unit 401 which supplies transform coefficients to the respective butterfly calculating units. Here, the fifth butterfly calculating unit 104 is identical to the second butterfly calculating unit 101. In addition, instead of the two-time delaying and inputting of input signals in the first embodiment, the orthogonal transform in VC-1 can be implemented by simultaneously supplying the input signals to the two butterfly calculating units, namely, the second butterfly calculating unit 101 and the fifth butterfly calculating unit 104 which are identical units, and also simultaneously supplying the two butterfly calculating units with different coefficients from the transform coefficient supplying unit 401, and performing the calculations. With this, the processing by the fifth butterfly calculating unit 104 in the second round of calculation is performed simultaneously and in parallel with the processing of the second butterfly calculating unit 101 in the first round, and thus the results of the calculation by the fourth butterfly calculating unit 103 using both the calculation results of the calculations for both the first round and the second round can be outputted swiftly and the orthogonal transform in VC-1 can be performed at high speed.

### (Third Embodiment)

Next, a third embodiment for the case of performing 4 × 4 transform matrix orthogonal transform (see previously described FIG. 3 and FIG. 4) shall be described hereinafter.

FIG. 18 is diagram showing the third embodiment in which 4 × 4 orthogonal transform is performed. (a) in FIG. 18 shows once again the transform matrix for a 4 × 4 orthogonal transform for reducing error in VC-1, shown in FIG. 4. (b) in FIG. 18 shows a matrix equation which shows, on the left, a matrix in which the second row and the third row of the transform matrix in (a) in FIG. 18 are interchanged, and shows, on the right, an equation that is a modification of the equation on the left. (c) in FIG. 18 is an illustration showing the transform coefficients for when the first butterfly calculating unit 100 performs the calculation for the matrix in (b) in FIG. 18.

The first butterfly calculating unit 100 performs four-input high-speed orthogonal transform. When the orthogonal transform apparatus 50 performs the orthogonal transform in VC-1, the first butterfly calculating unit 100 performs the calculation of the four-input high-speed orthogonal transform which reduces the error in VC-1, by performing the calculation for the transform coefficients in (c) in FIG. 18 which are supplied from the transform coefficient supplying unit 401, that is, the calculation for the matrix shown by (b) in FIG. 18.

It should be noted that the first butterfly calculating unit 100 also performs the calculation for the four-input high-speed orthogonal transform for reducing the error in H.264/AVC, which is based on the 4 × 4 transform matrix for H.264/AVC shown in FIG. 3, in the same manner as it performs the calculation for the four-input high-speed orthogonal transform for reducing the error in VC-1, which is based on the 4 × 4 transform matrix for VC-1 shown in FIG. 4.

According to the third embodiment, the first butterfly calculating unit 100 is able to implement the 4 × 4 orthogonal transform shown in FIG. 3 or FIG. 4, and is able to implement the 4 × 4 orthogonal transform for H.264/AVC and VC-1 by inputting four input signals to the first butterfly calculating unit 100 and inputting 4 × 4 transform coefficients from the transform coefficient supply unit 401 to the first butterfly calculating unit 100, and thus even the 4 × 4 orthogonal transforms in H.264/AVC and VC-1 can be implemented using only the orthogonal transform 50.

According to the orthogonal transform apparatuses 50 and 50a in the above-described first through third embodiments, it is possible to provide an orthogonal transform apparatus which can perform the orthogonal processing of new coding standards such as H.264/AVC or VC-1, and can also implement the processing for existing DCT orthogonal transforms such as in MPEG-2 by merely changing transform coefficients, and thus perform a high-speed orthogonal transform algorithm that is common to plural processes, without having to change the basic calculating unit and calculating device connection relationships as in the conventional configuration, since the calculations performed by the four-input basic calculating unit included in the second butterfly unit 101 can be switched.

In addition, with this, it is possible to implement plural orthogonal transforms using one common high-speed orthogonal transform algorithm calculating unit or circuit configuration (4-stage pipeline calculating circuit 51), and it is possible to achieve program standardization, reduction of dimensions of the entire semiconductor integrated circuit, lowering of power consumption, facilitation of the implementation of plural moving picture coding processes, and inhibition of error occurrence in the management of programs.

It should be noted that the orthogonal transform apparatus 50 (FIG. 9) divides a high-speed algorithm orthogonal transform apparatus that is based on a configuration of butterfly calculating units and performs orthogonal transform processing on input signals that have been processed in some way, into the four butterfly calculating units 100 to 103 which are configured of two-input basic calculating units and four-input calculating units performing product-sum calculation. In addition, the orthogonal transform apparatus 50: has, in the inputs of the butterfly calculating units 101 and 103, the delaying units 201 to 203 which delay input signals, and the selecting units 301 to 303 which select the inputs to the butterfly calculating units by selecting between the outputs from the delaying units 201 to 203 and the input signals; and includes the transform coefficient supplying unit 401 which supplies transform coefficients to the butterfly calculating units.

Meanwhile, the orthogonal transform apparatus 50a (FIG. 16) divides a high-speed algorithm orthogonal transform apparatus performing orthogonal transform processing on input signals that have been processed in some way, into the four butterfly calculating units 100 to 103 which are configured of two-input basic calculating units and four-input calculating units performing product-sum calculation. In addition, the orthogonal transform apparatus 50a: has in the inputs of the butterfly calculating units 101 and 103, the delaying units 202 and 203 which delay the input signals, and the selecting units 302 and 303 which select the inputs to the fourth butterfly calculating unit 103 by selecting between the outputs from the delaying units 202 and 203 and the input signals; places in parallel the two of the second butterfly calculating unit 101 and the fifth butterfly calculating unit 104 in the portion of the second butterfly calculating unit 101; and includes the fourth selecting unit 304 which selects between the second butterfly calculating unit 101 and the fifth butterfly calculating unit 104, and the transform coefficient supplying unit 401 which supplies transform coefficients for orthogonal transform to the respective butterfly calculating units.

This configuration implements an orthogonal transform unit for processing MPEG-1, MPEG-2, and MPEG-4 by supplying, from the transform coefficient supplying unit 401, the transform coefficients for DCT and transform coefficients of 0 for making the four-input basic calculating unit equivalent to a two-input basic calculating unit. Furthermore, this configuration implements an orthogonal transform unit for processing H.264/AVC by supplying transform coefficients of 0 for making the four-input basic calculating unit equivalent to a three-input calculating unit (see FIG. 3). In addition, this configuration implements an orthogonal transform unit for processing the orthogonal transform in VC-1 by performing the calculation on the odd-numbered side using direct matrix calculation by having the delaying unit input the input data two times and interchanging the transform coefficients for each time, in addition to having the transform coefficient supplying unit 401 supply the VC-1 transform coefficients and the transform coefficients of 0 for making the four-input basic calculating unit equivalent to a two-input calculating unit (see FIG. 14).

With this, the orthogonal transform apparatuses 50 and 50a can implement, using a common orthogonal transform unit, the processing for plural orthogonal transforms, particularly for orthogonal transforms having different basal properties.

It should be noted that the present invention is not limited to the previously described embodiments.

For example, the present invention may be implemented as a single-chip semiconductor circuit in the following manner.

FIG. 19 is a diagram showing an integrated circuit 50c.

The integrated circuit 50c is an integrated circuit which performs orthogonal transform on plural input signals.

It should be noted that the integrated circuit 50c is an example of the "integrated circuit" described in the Claims, and is also an example of the "orthogonal transform apparatus" in the Claims.

The integrated circuit 50c includes an orthogonal transform circuit 601 and a control unit 602.

The orthogonal transform circuit 601 includes the respective parts of the orthogonal transform apparatus 50 in the first embodiment (FIG. 9), that is, the first butterfly calculating unit 100, the second butterfly calculating unit 101, the third butterfly calculating unit 102, the fourth butterfly calculating unit 103, the fifth butterfly calculating unit 104, the third delaying unit 201, the second delaying unit 202, the first delaying unit 203, the third selecting unit 301, the second selecting unit 302, the first selecting unit 303, the fourth selecting unit 304, and the transform coefficient supplying unit 401 It should be noted that, in FIG. 19, illustration of the configuration for the aforementioned units of the integrated circuit 50c has been omitted.

It should be noted that, although these respective units are implemented through the wiring implemented in the integrated circuit 50c in the fourth embodiment, the respective units may also be function units implemented through software, or function units implemented through hardware, or they may be implemented through other methods.

By interchanging the inputs and outputs of the integrated circuit 50c, the control unit 602 selectively causes the orthogonal transform apparatus 601 included in the integrated circuit 50c to perform normal orthogonal transform and inverse orthogonal transform.

Furthermore, in the respective embodiments described previously, when the transform coefficients to be used in the product-sum calculations are a power-of-two, each of the first butterfly calculating unit 100 to the fourth butterfly calculating unit 103 (the first butterfly calculating unit 100 to the fifth butterfly calculating unit 104) may also operate as a bit shifter. In this manner, it is possible to make the configuration of each butterfly calculating unit simple and calculation can be executed at high speed, regardless of the performance of various transfer coefficient multiplication.

Furthermore, in the respective embodiments described previously, when the input signal on which product-sum calculation is to be performed or the transform coefficient is 0, each of the first butterfly calculating unit 100 to the fourth butterfly calculating unit 103 (the first butterfly calculating unit 100 to the fifth butterfly calculating unit 104) may output a selected 0 as the output result instead of multiplying the input signal with the transform coefficient. In this manner, unnecessary multiplication is not performed, and it is possible to reduce power consumption, simplify the configuration of the apparatus, and increase the speed of calculation.

Furthermore, in the respective embodiments described previously, when the input signal on which product-sum calculation is to be performed or the transform coefficient is 0, each of the first butterfly calculating unit 100 to the fourth butterfly calculating unit 103 (the first butterfly calculating unit 100 to the fifth butterfly calculating unit 104) may selectively perform multiplying the input signal with the transform coefficient and outputting the selected 0 as the output result instead of multiplying.

Furthermore, in the respective embodiments described previously, the second butterfly calculating unit 101 may function as a two-input basic calculating unit by performing multiplication with a transform coefficient 0, on two input signals among the four input signals, or by selecting 0 as the calculation result instead of multiplying. By adopting such configuration for example, the second butterfly calculating unit 101 changes form to the A-type second butterfly calculating unit 101A shown in (b) in FIG. 12.

### Industrial Applicability

The orthogonal transform apparatus and integrated circuit according to the present invention are useful in the field of image coding such as in moving picture coding since orthogonal transform processing in the MPEG-1, MPEG-2, MPEG-4, H. 264/AVC, and VC-1 moving picture coding standards are possible using one high-speed algorithm orthogonal transform unit.

## Claims

1. An orthogonal transform apparatus which performs orthogonal transform on plural input signals, said orthogonal transform apparatus comprising:
a first butterfly calculating unit including a two-input basic calculating unit configured to perform a product-sum calculation of two inputs on input signals which are part of the plural input signals;
a second butterfly calculating unit including a four-input basic calculating unit configured to perform a product-sum calculation of four inputs on input signals which are a remainder of the plural input signals;
a third butterfly calculating unit including a two-input basic calculating unit configured to perform a product-sum calculation of two inputs on a result of the calculation by said second butterfly calculating unit;
a first delaying unit configured to hold a result of the calculation by said first butterfly calculating unit;
a first selecting unit configured to select data from between the result of the calculation by said first butterfly calculating unit and the result of the calculation held by said first delaying unit;
a second delaying unit configured to hold a result of the calculation by said third butterfly calculating unit;
a second selecting unit configured to select data from between the result of the calculation by said third butterfly calculating unit and the result of the calculation held by said second delaying unit;
a fourth butterfly calculating unit including a two-input basic calculating unit configured to perform a product-sum calculation of two inputs on the data selected by said first selecting unit and the data selected by said second selecting unit; and
a transform coefficient supplying unit configured to supply, to said first to fourth butterfly calculating units, transform coefficients to be used in the product-sum calculations by said first to fourth butterfly calculating units,
wherein said second butterfly calculating unit is configured to switch the product-sum calculation performed by said four-input basic calculating unit of said second butterfly calculating unit, between a predetermined three-input calculation and a predetermined two-input calculation for performance of plural types of orthogonal transforms by said first to fourth butterfly calculating units.

2. The orthogonal transform apparatus according to Claim 1, further comprising:
a third delaying unit configured to hold the input signals which are the remainder of the plural input signals; and
a third selecting unit configured to select data from between the input signals which are the remainder of the plural input signals and the input signals held by said third delaying unit,
wherein said second butterfly calculating unit is configured to perform the product-sum calculation on the data selected by said third selecting unit.

3. The orthogonal transform apparatus according to Claim 1, further comprising:
a fifth butterfly calculating unit including a four-input basic calculating unit configured to perform a product-sum calculation of four inputs on the input signals which are the remainder of the plural input signals; and
a fourth selecting unit configured to select data from between a result of the calculation by said second butterfly calculating unit and a result of the calculation by said fifth butterfly calculating unit,
wherein said third butterfly calculating unit is configured to perform the product-sum calculation on the data selected by said fourth selecting unit, and
said transform coefficient supplying unit is configured to supply, to said fifth butterfly calculating unit, transform coefficients to be used in the product-sum calculation by said fifth butterfly calculating unit.

4. The orthogonal transform apparatus according to Claim 1,
wherein each of said first to fourth butterfly calculating units is configured to perform the product-sum calculation for orthogonal transform based on Chen's high-speed algorithm.

5. The orthogonal transform apparatus according to Claim 1,
wherein said transform coefficient supplying unit is configured to change the transform coefficients to be supplied to said first to fourth butterfly calculating units, on a processing-unit basis of the product-sum calculation repeated by said first to fourth butterfly calculating units.

6. The orthogonal transform apparatus according to Claim 1,
wherein, when an input signal on which product-sum calculation is to be performed or a transform coefficient is 0, each of said first to fourth butterfly calculating units is configured to output a selected 0 as an output result, instead of multiplying the input signal with the transform coefficient.

7. The orthogonal transform apparatus according to Claim 1,
wherein, when an input signal on which product-sum calculation is to be performed or a transform coefficient is 0, each of said first to fourth butterfly calculating units is configured to selectively perform multiplying the input signal with the transform coefficient and outputting a selected 0 as an output result instead of performing the multiplying.

8. The orthogonal transform apparatus according to Claim 1,
wherein said second butterfly calculating unit is configured to function as a two-input basic calculating unit by performing multiplication with a transform coefficient of 0, on two input signals out of four input signals, or by selecting 0 as a calculation result instead of performing the multiplication.

9. The orthogonal transform apparatus according to Claim 1,
wherein said first butterfly calculating unit is configured to perform high-speed orthogonal transform of four inputs.

10. The orthogonal transform apparatus according to Claim 1,
wherein each of said first to fourth butterfly calculating units is configured to operate as a bit shifter when the transfer coefficients to be used in the product-sum calculation are power-of-two.

11. The orthogonal transform apparatus according to Claim 1, further comprising
a control unit configured to selectively cause said orthogonal transform apparatus to perform normal orthogonal transform and inverse orthogonal transform, by interchanging an input and an output of said orthogonal transform apparatus.

12. An integrated circuit which performs orthogonal transform on plural input signals, said integrated circuit comprising:
a circuit that functions as the units according to Claim 1.
